Europäisches Patentamt

**European Patent Office**

Office européen des brevets

(11) Veröffentlichungsnummer: **0 249 759**
**B1**

(12) **EUROPÄISCHE PATENTSCHRIFT**

(45) Veröffentlichungstag der Patentschrift:
25.07.90

(21) Anmeldenummer: 87107248.4

(22) Anmeldetag: 19.05.87

(51) Int. Cl.⁵: **B32B 27/30, B32B 25/16**

(54) Verfahren zur Herstellung von homogenen Kautschuk/PVC-Belägen in Form von Flächengebilden.

(30) Priorität: 14.06.86 DE 3620067

(43) Veröffentlichungstag der Anmeldung:
23.12.87 Patentblatt 87/52

(45) Bekanntmachung des Hinweises auf die Patenterteilung:
25.07.90 Patentblatt 90/30

(84) Benannte Vertragsstaaten:
AT BE CH DE ES FR GB GR IT LI LU NL SE

(56) Entgegenhaltungen:
EP-A- 0 141 108
DE-A- 2 551 517
GB-A- 2 120 258

(73) Patentinhaber: Pegulan-Werke AG, Foltzring 35,
D-6710 Frankenthal/Pfalz(DE)

(72) Erfinder: Dürkop, Joachim, Dr., Eichenweg 13,
D-5503 Konz(DE)
Erfinder: Blass, Reinhold, Hauptstrasse 120 A,
D-5511 Ockfen(DE)

(74) Vertreter: Grussdorf, Jürgen, Dr., Patentanwälte
Zellentin & Partner Rubensstrasse 30,
D-6700 Ludwigshafen(DE)

## Beschreibung

Die Erfindung betrifft ein Verfahren zur Herstellung von homogenen Kautschuk/PVC-Belägen in Form von Flächengebilden mit glatter Oberfläche, bestehend aus einer Kombination der Werkstoffe Weich-Polyvinylchlorid und synthetischem Kautschuk.

Bodenbeläge aus Kunststoff, insbesondere auch solche aus Polyvinylchlorid sind schon seit langer Zeit bekannt, desgleichen Bodenbeläge aus Gummi.

Die Bodenbeläge z. B. aus Polyvinylchlorid weisen dabei die Vorteile auf, daß sie gut verschweißbar sind, gute Rückstelleigenschaften und Abriebfestigkeiten aufweisen sowie auf den üblichen Kalandermaschinen gut herzustellen sind. Außerdem sind technisch nahezu unbegrenzte Dessinierungsmöglichkeiten gegeben, die Bodenbeläge sind leicht zu verlegen und sie besitzen eine lange Gebrauchsdauer.

Die Bodenbeläge aus Gummi weisen gegenüber den Belägen aus Polyvinylchlorid eine höhere Rutschfestigkeit auf und besitzen eine größere Beständigkeit gegenüber Tabaksglut.

Der Erfindung liegt nun die Aufgabe zugrunde, homogene Kautschuk/PVC-Beläge in Form von Flächengebilden mit einer glatten Oberfläche aus einer Kombination der beiden Werkstoffe Weich-Polyvinylchlorid und synthetischem Kautschuk zu schaffen, die die guten Eigenschaften der beiden Werkstoffe besitzen. Derartige Flächengebilde sollen auch auf herkömmlichen Anlagen, wie Maschinen zur PVC-Verarbeitung, herzustellen sein.

Man hat bisher schon versucht derartige Flächengebilde in der Weise herzustellen, daß man einem Kautschuk-Ruß-Batch zu einer Polyvinylkomponente hinzufügte. Dabei ergab sich jedoch, daß beim Kalandrieren das Kautschuck-Ruß-Batch mit dem Polyvinylchlorid nicht oder nur unzureichend zu mischen war. Wurden dann diesen unter Schwierigkeiten hergestellten Mischungen die für die Vulkanisation des Kautschuks erforderlichen Vulkanisationshilfsmittel hinzugefügt, so verteilten sich diese beim weiteren Mischvorgang homogen in Polyvinylchlorid und gelangten nur in unzureichender Weise in die Kautschuk-Komponente zwecks nachfolgender Vulkanisation. Damit erhielt man nur inhomogene, nicht vollständig durchvulkanisierte, klebrige und somit nicht gebrauchsfähige Flächengebilde.

Die gestellte Aufgabe wird nun erfindungsgemäß dadurch gelöst, daß ein Weich-Polyvinylchlorid-Dryblend zuerst direkt mit einem Styrol-Butadien-Kautschuk-Dryblend (SBR-Dryblend) vermengt wird. Das letztere Dryblend enthält dabei bereits einen Weichmacher und die entsprechenden Vulkanisationshilfsmittel, die in den Kautschuk einmigrieren bzw. anhaften und für den späteren Vulkanisationsprozeß zur Verfügung stehen. Darauf werden die beiden Dryblends bei einer Temperatur von 120 bis 140°C vermischt und dabei die Kombination homogenisiert und vorplastifiziert. Aus dieser vorplastifizierten Werkstoff-Kombination werden dann 0,5 bis 2,0 mm dicke Folien geformt, je nach der gewünschten Dicke des herzustellenden Flächengebildes, zwei oder mehrere der einzelnen Folien aufeinandergelegt und unter Druck und einer Temperatur von 140 bis 150°C verbunden. Anschließend wird das gesamte Flächengebilde einer weiteren Wärmebehandlung unterworfen, wobei es auf eine für die Vulkanisation des Stryol-Butadien-Kautschuks erforderliche Temperatur erwärmt und dabei durchvulkanisiert wird. Das so erhaltene homogene, eine glatte Oberfläche aufweisende Flächengebilde kann dann abgenommen und zugeschnitten werden oder während der Vulkanisation oder nach der Vulkanisation unter weiterer Temperaturerhöhung geprägt werden.

Bei der erfindungsgemäßen Verfahrensweise werden 10 bis 50 Gewichtsprozent an Styrol-Butadien-Kautschuk-Dryblend dem Polyvinylchlorid-Dryblend zugesetzt.

Je höher der Anteil an Styrol-Butadien-Kautschuk-Dryblend an der Gesamtmischung ist desto mehr ist naturgemäß der "Gummicharakter" des Flächengebildes ausgeprägt. Um eine ausreichende Glätte der Oberfläche des Flächengebildes zu erhalten, ist es dabei wichtig, daß je höher der Anteil an dem Styrol-Butadien-Kautschuk-Dryblend in der Mischung ist, bei dem nachfolgenden Verarbeitungsvorgang die Einzelfolie für den späteren Doublierungsprozeß umso dünner ausgewalzt werden muß. In der Praxis hat sich dabei ergeben, daß bei einem 10gewichtsprozentigen Zusatz an SBR-Dryblend eine ungefähr 2 mm dicke Einzelfolie, bei einem 50gewichtsprozentigem Zusazt an SBR-Dryblend eine 0,5 mm dicke Einzelfolie ausgewalzt werden sollte.

Aus der nachfolgenden Aufstellung ist die "optimale" Foliendicke in Abhängigkeit von dem Anteil an Styrol-Butadien-Kautschuk-Dryblend in der Mischung ersichtlich.

| Foliendicke (mm) | SBR-Anteil in der Mischung (%) |
|---|---|
| 2 | 0 |
| 2 | 10 |
| 1 | 20 |
| 0,5–1,0 | 30 |
| 0,5 | 40 |
| 0,5 | 50 |

Als vorteilhaft hat es sich für die Eigenschaften der Endprodukte herausgestellt, bei dem Herstellungsverfahren für das Kautschuk-Dryblend Styrol-Butadien-Copolymerisate einzusetzen, die einen Anteil von 20 bis 50, insbesondere von 23,5 bis 40 Gewichtsprozent an Styrol aufweisen.

Für die Herstellung von schwarz gefärbten Flächengebilden, wie Bodenbeläge, werden dem Styrol-Butadien-Kautschuk-Dryblend auf 100 Teile Kautschuk 10 bis 100 Teile Ruß, bevorzugterweise 50 bis 80 Teile Ruß zugesetzt.

Für in der Bodenbelagspraxis auch üblichen, hellen Einfärbung werden dem Styrol-Butadien-Kautschuk-Dryblend anstelle von Ruß 10 bis 70, insbesondere um die 50 Gewichtsprozent an Kieselsäureverbindungen zugesetzt.

Um die erfindungsgemäß hergestellten Flächengebilde z. B. bei ihrem Einsatz als Bodenbeläge im Objektbereich, wie Fußgängerzonen, Hauseingänge usw. für den Benutzer rutschfester auszugestalten, werden in einer besonderen Ausführungsform des Verfahrens die Flächengebilde während der Vulkanisation oder nach der Vulkanisation nochmals über die Vulkanisationstemperatur erwärmt und dabei geprägt.

Nachfolgend wird ein Verfahrensbeispiel für einen schwarz eingefärbten Bodenbelag angegeben:

Als PVC-Komponente wird eine Weich-PVC-Kalandermischung (Kalander-Dryblend) in einem mit einem Rührer versehenen Fluidmischer hergestellt, wie sie auch bei der Produktion von PVC-Fußbodenbelägen Verwendung findet:

| Dieses Kalander-Dryblend besteht aus: | |
| --- | --- |
| S-PVC (K-Wert 60) | 75,0 Teile |
| E-PVC (K-Wert 70) | 25,0 " |
| Dioctylphthalat (als Weichmacher) | 32,0 " |
| Kreide (als Füllstoff) | 50,0 " |
| Ba-Zn-Stabilisator (Stearate) | 5,0 " |
| Expoxy-Weichmacher (Sojabohnenöl) | 3,0 " |
| Gleitmittel (Esterwachs) | 1,5 " |
| | 191,5 Teile |

Für die Kautschuk-Komponente werden in einem Knetkessel zuerst 100 Teile SBR (Viskosität 90) und 76 Teile Ruß (Standardruß N 330) zu einem Batch verarbeitet. Dieses Ruß-Batch wird anschließend wiederum in einem Fluidmischer zu einem Dryblend verarbeitet, das folgende Zusammensetzung aufweise:

| SBR-Ruß-Batch | 176,0 Teile |
| --- | --- |
| Stearinsäure | 2,0 " |
| Zinkoxyd | 3,0 " |
| Vulkanox 4010 NA | 2,0 " |
| Vulkanox HS | 1,5 " |
| Vulkanox MB | 1,5 " |
| Ozonschutzwachs 111 | 2,0 " |
| Gulfrex 3011 (arom. Öl als Weichmacher) | 15,0 " |
| Schwefel | 1,8 " |
| Vulkacit CZ | 1,2 " |
| Vulkacit D | 0,5 " |
| Vulkacit Thiuram (TMTD) | 0,2 " |
| | 206,7 Teile |

Die Reihenfolge der Zugabe der Zuschlagestoffe ist dabei nicht ausschlaggebend. Normalerweise werden zuerst die pulverförmigen Stoffe zugesetzt und darauf die flüssigen, weichmachenden Öle und schließlich zum Schluß das Ozonschutzwachs. Die Drehzahl des Fluidmischers soll zwischen 200 und 500 Umdrehungen/Minute liegen. Höhere Drehzahlen sind nicht empfehlenswert, da sonst eine zu hohe, nicht erwünschte Temperatur entstehen könnte. 70 Teile des PVC-Dryblends und 30 Teile des SBR-Dryblends werden dann in einem Kneter bei 120°C homogen gemischt, dabei vorplastifiziert und dann auf Mischwalzwerke ausgetragen. Von dem Mischwalzwerken wird nach einer Mischzeit vn 5 Minuten bei 130°C das Mischgut auf einen Kalander übertragen und eine 2 mm dicke Folie gezogen. Diese Folie ist nur unzureichend geglättet und noch nicht durchvulkanisiert.

3

Um einen 4 mm dicken Bodenbelag zu produzieren, werden wie bei der Doublierung von PVC-Folien zwei Stück der geformten Folien auf ein Textilmitläuferband übereinander gelegt und zu einer Auma-Maschine geführt, wo sie unter einem Druck von 4,9 bar (5 kp/cm$^2$) und einer Temperatur von 140°C verbunden werden. Dabei wird ein 4 mm dickes Flächengebilde erhalten.

Anschließend wird das Flächengebilde während eines Zeitraumes von 3 Minuten an einer auf 160°C eingestellte IR-Heizung vorbeigeführt. Dabei wird ein in seinem Kautschuk-Anteil durchvulkanisertes schwarz eingefärbtes Flächengebilde erhalten, das anschließend noch durch eine auf eine Temperatur von 150°C eingestellte Temperanlage geführt, dort nachvulkanisiert und getempert wird, bevor es auf eine Aufwickelvorrichtung aufgewickelt wird.

Nach der vorgesehenen Verwendungsweise wird ein Teil der Produktion des erhaltenen Bodenbelages noch mit einer Matt-Finish-Ausrüstung versehen. Ein anderer Produktionsteil wird direkt von der IR-Heizung zu einer Prägeeinrichtung geführt, die aus zwei beheizten Walzen, von denen eine mit Verteifungen versehen ist, besteht, wo das Flächengebilde weiter auf 180°C erwärmt wird und gleichzeitig eine Noppenprägung auf der einen Seite des Bodenbelages erzielt wird.

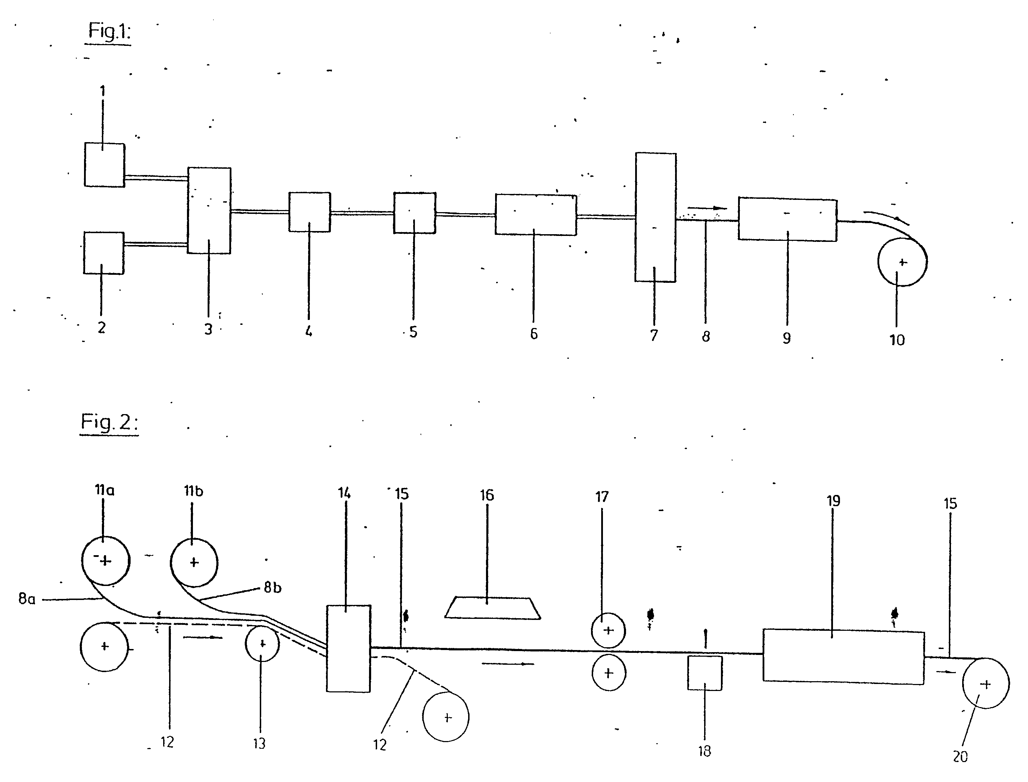

Eine beispielhafte Vorrichtung - wie sie aus der PVC-Verarbeitung bekannt ist - mit der der neue Werkstoff nach dem erfindungsgemäßen Verfahren hergestellt werden kann, ist in den Figuren 1 und 2 dargestellt.

Fig. 1 zeigt dabei die Vorrichtungen für die Herstellung der Einzelfolie aus der Werkstoffkombination von Polyvinylchlorid und synthetischem Kautschuk.

In der Fig. 1 ist mit 1 der Fluidmischer bezeichnet, in dem das Weich-Polyvinylchlorid-Dryblend hergestellt wird. Mit 2 ist der Fluidmischer bezeichnet, in dem das StyrolButadien-Kautschuk-Dryblend hergestellt wird. 3 bedeutet den Kneter, in dem die beiden Dryblends vermengt werden und 4 und 5 zwei Mischwalzwerke, in denen die Mischung gemischt wird.

6 bedeutet einen Warmgranulator über den das Mischgut auf einen Kalander 7 übertragen wird und 8 die auf den Kalander gezogene Einzelfolie. Mit 9 ist eine Heizstrecke bezeichnet, mittels derer die Einzelfolie 8 geglättet wird, bevor sie auf einen Wickler 10 aufgewickelt wird. Fig. 2 zeigt dann eine Vorrichtung für die Doublierung der Einzelfolien und die Vulkanisierung des Flächengebildes.

Dabei bedeuten 11 a und 11 b zwei Folienabwickler, von denen zwei Einzelfolien 8 a und 8 b abgewickelt und mit Hilfe eines Textilmitläuferbandes 12 über eine beheizte Walze 13 geführt und vorgewärmt werden.

Mit 14 ist dann die Doubliermaschine bezeichnet, wo die zugeführten Einzelfolien 8 a und 8 b unter Einwirkung von Druck und Wärme zu einem Flächengebilde 15 verbunden und dieses vorvulkanisiert wird, 16 bedeutet eine Heizeinrichtung, an der das Flächengebilde 15 - nach vorhergehenden Abzug des Textilmitläuferbandes 12 - vorbeigeführt, dabei auf die Vulkanisationstempatur des Styrol-Butadien-Kautschuks erwärmt und entsprechend der Kautschuk-Anteil durchvulkanisiert wird.

17 bedeutet dann eine beheizte Prägeeinrichtung, bestehend aus zwei Walzen, in der das durchvulkanisierte Flächengebilde 15 geprägt wird.

18 stellt einen Klipper dar und 19 eine Temperanlage, in der das Flächengebilde 15 nachvulkanisiert wird und schließlich ist 20 die Aufwickeleinrichtung für das fertige Flächengebilde 15.

Die mit dem erfingsgemäßen Verfahren erzielten Vorteile bestehen insbesondere darin, daß homogene Beläge in Form von Flächengebilden mit glatter Oberfläche aus einer Kombination der beiden Werkstoffe Weich-Polyvinylchlorid und Styrol-Butadien-Kautschuk hergestellt werden können, welches sowohl die guten Gebrauchseigenschaften beider Werkstoffe in sich vereinigt und bei denen auch nahezu unbegrenzte Dessinierungsmöglichkeiten gegeben sind.

Das erfindungsgemäße Verfahren selbst ist in seiner Technik problemlos durchzuführen, wobei z. B. ein für die PVC-Verarbeitung geeigneter Maschinenpark ebenfalls eingesetzt werden kann.

Die nach dem erfindungsgemäßen Verfahren hergestellten Beläge in Form eines Flächengebildes können auch als Flächenbeläge in oder auf Gebäudeteile eingesetzt werden; z. B. als Fußbodenbeläge, Wandbeläge, Beläge auf Terassen, Fluren, Treppen usw.

Dergleichen finden die nach dem erfindungsgemäßen Verfahren hergestellten Beläge in Form von Flächengebilden auch Verwendung in oder auf Kraftfahrzeugteilen, z. B. bei der Auslegung mit Belägen des Fahrgastraumes oder Kofferraumes.

**Patentansprüche**

1. Verfahren zur Herstellung von homogenen Kautschuk/PVC-Belägen in Form von Flächengebilden mit glatter Oberfläche, bestehend aus einer Kombination von Weich-Polyvinylchlorid und synthetischem Kautschuk, dadurch gekennzeichnet, daß ein Weich-Polyvinylchlorid Dryblend mit einem Styrol-Butadien-Kautschuk-Dryblend vermengt wird, die beiden Dryblends bei einer Temperatur von 120 bis 140°C vermischt und dabei die Kombination homogenisiert und vorplastifiziert wird, aus dieser vorplastifizierten Kombination 0,5 bis 2,0 mm dicke Folien geformt werden, nach erfolgter Formgebung zwei oder mehrere der erhaltenen Folien aufeinandergelegt und unter Druck und einer Temperatur von 140 - 150°C verbunden werden, worauf anschließend das Flächengebilde auf eine für die Durchvulkanisation des Styrol-Butadien-Kautschuks erforderliche Temperatur erwärmt wird.

2. Verfahren nach Anspruch 1, dadurch gekennzeichnet, daß das Styrol-Butadien-Kautschuk-Dryblend zu 10 bis 50 Gewichtsprozent dem Polyvinylchlorid-Dryblend zugesetzt wird.

3. Verfahren nach Anspruch 1 oder 2, dadurch gekennzeichnet, daß nach der Vulkanisation das Flächengebilde mit glatter Oberfläche nochmals auf die Vulkanisationstemperatur erwärmt und geprägt wird.

4. Verwendung eines nach einem der Ansprüche 1 bis 3 hergestellten Belages in Form eines Flächengebildes, dadurch gekennzeichnet, daß er als Flächenbelag in oder auf Gebäudeteilen eingesetzt wird.

5. Verwendung eines nach einem der Ansprüche 1 bis 3 hergestellten Belages in Form eines Flächengebildes, dadurch gekennzeichnet, daß er als Flächenbelag in oder auf Kraftfahrzeugteilen eingesetzt wird.

## Claims

1. Process for the production of homogeneous rubber/PVC coverings in the form of sheets with smooth surface, consisting of a combination of soft polyvinyl chloride and synthetic rubber, characterised in that a soft polyvinyl chloride dry blend is mixed with a styrenebutadiene rubber dry blend, the two dry blends are mixed at a temperature of 120 to 140°C and the combination thereby homogenised and preplastified, from this pre-plastified combination are formed 0.5 to 2.0 mm thick foils, after forming has taken place two or more of the foils obtained are laid on one another and bonded under pressure and at a temperature of 140–150°C, whereupon the sheet is subsequently heated to a temperature necessary for the vulcanising through of the styrene-butadiene rubber.

2. Process according to claim 1, characterised in that the styrene-butadiene rubber dry blend is added in 10 to 50 weight percent to the polyvinyl chloride dry blend.

3. Process according to claim 1 or 2, characterised in that, after the vulcanisation, the sheet with smooth surface is again heated to the vulcanisation temperature and embossed.

4. Use of a covering produced according to one of claims 1 to 3 in the form of a sheet, characterised in that it is used as flat covering in or on parts of buildings.

5. Use of a covering produced according to one of claims 1 to 3 in the form of a sheet, characterised in that it is used as flat covering in or on parts of motor vehicles.

## Revendications

1. Procédé de préparation de revêtements homogènes de caoutchouc/CPV sous forme de produits plans à surface lisse, ces revêtements étant constitués d'une combinaison de chlorure de polyvinyle souple et de caoutchouc synthétique, caractérisé en ce qu'on mêle à un mélange à chaud (dryblend) de chlorure de polyvinyle souple un mélange à chaud (dryblend) de caoutchouc de styrène-butadiène, on mélange les deux mélanges à chaud à une température de 120° à 140°C et on homogénéise et préplastifie la combinaison, on façonne à partir de cette combinaison préplastifiée des feuilles d'une épaisseur de 0,5 à 0,2 mm, on superpose, après que le façonnage a eu lieu, deux ou plusieurs des feuilles obtenues et on les relie sous pression et à une température de 140° à 150°C, après quoi le produit plan est ensuite chauffé à une température nécessaire pour la vulcanisation complète du caoutchouc de styrène-butadiène.

2. Procédé suivant la revendication 1, caractérisé en ce qu'on ajoute au mélange à chaud de chlorure de polyvinyle de 10 à 50% en poids du mélange à chaud de caoutchouc de styrène-butadiène.

3. Procédé suivant l'une des revendications 1 et 2, caractérisé en ce que, après la vulcanisation, le produit plan à surface lisse est encore une fois chauffé à la température de vulcanisation et estampé.

4. Utilisation d'un revêtement préparé suivant l'une des revendications 1 à 3 sous la forme d'un produit plan, caractérisée en ce qu'il est mis en œuvre comme revêtement de surface dans ou sur des parties de bâtiment.

5. Utilisation d'un revêtement préparé suivant l'une des revendications 1 à 3 sous la forme d'un produit plan, caractérisée en ce qu'il est mis en œuvre comme revêtement de surface dans ou sur des parties de véhicule automobile.

Fig.1:

Fig.2: